# EUROPÄISCHE PATENTSCHRIFT

(11) **EP 1 671 298 B1**
(45) Veröffentlichungstag und Bekanntmachung des Hinweises auf die Patenterteilung: **04.04.2007**
(21) Anmeldenummer: 04762460.6
(22) Anmeldetag: 22.07.2004
(51) Int. Cl.: G08G 1/16, B60R 21/34

(54) **VORRICHTUNG ZUR DETEKTION EINER ANNÄHERUNG AN EINEN FUSSGÄNGERÜBERWEG IN EINEM FAHRZEUG**
DEVICE USED IN A VEHICLE FOR DETECTING THE VEHICLE'S APPROACH OF A CROSSWALK
DISPOSITIF POUR DETECTER L'APPROCHE D'UN PASSAGE POUR PIETONS DANS UN VEHICULE

(30) Priorität: 10.09.2003 DE 10341753
(43) Veröffentlichungstag der Anmeldung: 21.06.2006
(73) Patentinhaber: ROBERT BOSCH GMBH, 70442 Stuttgart (DE)
(72) Erfinder: LICH, Thomas, 71409 Schwaikheim (DE); MACK, Frank, 70376 Stuttgart (DE)
(86) Internationale Anmeldenummer: PCT/DE2004/001610
(87) Internationale Veröffentlichungsnummer: WO 2005/027075

(56) Entgegenhaltungen:
- EP-A- 1 095 832
- DE-A- 10 137 817
- US-A1- 2002 093 180

## Beschreibung

Die Erfindung geht aus von einer Vorrichtung zur Detektion einer Annäherung an einen Fußgängerüberweg in einem Fahrzeug nach der Gattung des unabhängigen Patentanspruchs.

Aus JP 2001/028050 ist eine Vorrichtung bekannt, mit der ein Fußgänger erkannt werden kann. Die Vorrichtung verwendet dazu eine Kamera.

Aus EP 1 095 832 A1 ist es bekannt, mittels eines Ortungssystems der Abstand zu einem Fußgängerüberweg zu erkennen.

### Vorteile der Erfindung

Die erfindungsgemäße Vorrichtung zur Detektion einer Annäherung an einen Fußgängerüberweg in einem Fahrzeug mit den Merkmalen des unabhängigen Patentanspruchs hat demgegenüber Vorteile. Es ist vorgesehen, dass nunmehr in Abhängigkeit von der Annäherung eines diese Annäherung kennzeichnendes Signal erzeugt wird. Damit wird der Gefahr Rechnung getragen, die von einem Fußgängerüberweg potentiell ausgeht. Hier können Kinder und andere Fußgänger leichtsinnig die Straße passieren, so dass hier die Aufmerksamkeit des Fahrers besonders hoch sein muss. Um ihn im Rahmen eines Fahrerassistenzsystems dabei zu unterstützen, wird ein die Annäherung kennzeichnendes Signal erzeugt. Dieses Signal kann in Abhängigkeit von einer Umfeldsensorik erzeugt werden oder auch mittels einer Ortungsvorrichtung, beispielsweise einer GPS-Ortungsvorrichtung bzw. einem Navigationsgerät. Insgesamt erhöht dies die Verkehrssicherheit, da in Abhängigkeit von diesem ersten Signal weitere Maßnahmen getroffen werden können, die zur Sicherheit der Fußgänger und des Fahrzeugs führen.

Erfindungsgemäß wird mittels einer Umfeldsensorik, die zur Erzeugung des ersten Signals dient, der Verdeckungsgrad des Fußgängerüberwegs bestimmt. In Abhängigkeit davon kann ein Gefahrenpotential bestimmt werden, denn umso höher der Verdeckungsgrad des Fußgängerüberwegs ist, umso größer ist die Unsicherheit, dass Fußgänger hinter Hindernissen hervorschnellen und zu spät erkannt werden. Dieses zweite Signal, das in Abhängigkeit von dem Verdeckungsgrad erzeugt wird, wird dann für weitere Aktionen verwendet. Vorteilhafterweise kann dieses zweite Signal dazu verwendet werden, eine Ausgabe auszulösen. Diese Ausgabe kann eine optische, akustische und/oder haptische Warnung an den Fahrer sein. Die optische Ausgabe kann beispielsweise auf einem Display erfolgen oder auf einem Head-Up-Display oder auf einem Netzhautprojektor, während die akustische Ausgabe beispielsweise über das fahrzeugeigene Unterhaltungssystem erfolgen kann oder auch über die Hupe, um beispielsweise potentiellen Unfallgegnern eine Warnung zusätzlich zu geben. Alternativ und/oder zusätzlich kann das zweite Signal auch zur Aktivierung eines Fahrzeugsystems genutzt werden. Als Fahrzeugsystem bietet sich im Bereich eines Fußgängerübergangs ein Fußgängerschutzsystem an, wie beispielsweise eine aufstellbare Fronthaube oder ein Außenairbag, wobei dann zusätzlich zumindest ein drittes Signal von einer Kontaktsensorik verwendet wird. Beispielsweise könnte das zweite Signal dann dazu verwendet werden, um den Auslösealgorithmus für das Fußgängerschutzsystem schärfer zu schalten. Dies wird beispielsweise durch ein Absenken von Schwellen in dem Algorithmus bewirkt. Insbesondere kann dabei auch die Rauschwelle abgesenkt werden. Auch die Fahrzeugeigengeschwindigkeit und/oder die Fahrzeugobjektrelativgeschwindigkeit kann hier dann zusätzlich berücksichtigt werden.

Durch die in den abhängigen Ansprüchen aufgeführten Maßnahmen und Weiterbildungen sind vorteilhafte Verbesserungen der im unabhängigen Patentanspruch angegebenen Vorrichtung zur Detektion einer Annäherung an einen Fußgängerüberweg in einem Fahrzeug möglich.

Weiterhin ist es von Vorteil, dass als Fahrzeugsystem ein Bremssystem und/oder ein Motormanagementsystem verwendet wird, um ein Stellsignal zu erzeugen, so dass das Fahrzeug bei einer Gefahr verlangsamt wird oder zum Stillstand gebracht wird. Dieses Stellsignal kann insbesondere in Abhängigkeit von einer Geschwindigkeit erzeugt werden, wobei die Geschwindigkeit die Eigengeschwindigkeit und/oder die Relativgeschwindigkeit zu einem Aufprallobjekt sein kann.

### Zeichnung

Ausführungsbeispiele der Erfindung sind in der Zeichnung dargestellt und werden in der nachfolgenden Beschreibung näher erläutert.

### Es zeigen

Figur 1 eine Szene mit einem Fußgängerüberweg und
Figur 2 ein Blockschaltbild der erfindungsgemäßen Vorrichtung.

### Beschreibung

Es ist in Europa mit einer gesetzlichen Fußgängerschutzpflicht bis zum Jahre 2010 zu rechnen. Derzeit haben sich jedoch die Fahrzeughersteller für eine Selbstverpflichtung bis zum Jahre 2006 ausgesprochen, die einen verbesserten Fußgängerschutz, wie einer entsprechenden Formgebung und ein Padding des Fahrzeugfrontands beinhaltet. Dieser Fußgängerschutz schützt jedoch nur beschränkt und deshalb wächst der Druck, ein aktives System im Jahre 2010 auf dem Markt eingeführt zu haben.

Es existieren im Bereich der Aktuatorik für Fußgängerschutzsysteme als auch der Sensorik verschiedene Konzepte. Im Bereich der Sensorik sind vorwiegend Kontaktsensoren, die in der Stoßstange verbaut sind, geplant. Diese basieren auf Kraftmessung oder Verformungsänderung und können sich über die gesamte Breite der Stoßstange erstrecken. Beispiele für solche Kraftsensoren sind eine Piezofolie, Dehnmesssteifen, Lichtsensoren oder Sensoren aus Komposit. Bei Verformungssensoren handelt es sich zum Teil ebenfalls um Lichtleiter oder einfache Kontaktschalter. Im weiteren besteht die Möglichkeit, direkt an der sogenannten Crashbox verschiedene Beschleunigungs- oder kraftmessende Sensoren anzubringen.

Im weiteren sind auch vorausschauende Sensoren angedacht, wie z. B. radarbasierte oder Videosensoren, die einen Fußgänger anhand der reflektierten Signale bzw. über eine Bildauswertung erkennen sollen.

Für den Fußgängerschutz werden im wesentlichen Airbagsysteme in die Fahrzeugfront integriert oder aber die Fronthaube wird angehoben, um den Aufprall der Person entsprechend entgegenzuwirken.

Erfindungsgemäß wird nun vorgeschlagen, die Annäherung an einen Fußgängerüberweg wie ein Zebrastreifen zu erkennen und in Abhängigkeit davon ein Signal zu erzeugen. Mit diesem Signal wird dann beispielsweise eine Umfeldsensorik aktiviert, um einen Verdeckungsgrad d. h. eine optische Verdeckung für das Fahrzeug des Fußgängerüberwegs zu bestimmen. In Abhängigkeit von dem Verdeckungsgrad werden dann weitere Aktionen gestartet, wie die Ausgabe von Warnungen und/oder ein Eingriff in das Fahrsystem und/oder die Aktivierung bzw. Versetzung in einen Brereitschaftszustand von Fußgängerschutzsystemen. Bei Fahrzeugsystemen ist insbesondere daran gedacht, die Fahrzeugeigengeschwindigkeit zu reduzieren. Dafür ist dann auch die Information der Eigengeschwindigkeit bei Detektion notwendig, zu der die Tachogeschwindigkeit oder die Raddrehzahl verwendet werden kann. Die Annäherung an den Fußgängerüberweg kann mit einer Ortungsvorrichtung und/oder einer Umfeldsensorik wie einer Videosensorik erkannt werden. Als Ortungsvorrichtung kann beispielsweise ein GPS (Global Positioning System) verwendet werden. Dabei kann eine globale Datenbank verwendet werden, die angibt, an welchen Orten ein Fußgängerüberweg zu erwarten ist, so dass dann aufgrund der Position eine Erkennung der Annäherung an diesen Fußgängerüberweg erfolgreich ist. Die Umfeldsensorik und die Ortungsvorrichtung können auch miteinander kombiniert werden, um eine größere Sicherheit bzw. Redundanz zu erreichen.

Die Information, dass ein momentan schlecht zu überschauender Fußgängerüberweg vorliegt, kann derart für die Fußgängersensorik genutzt werden, indem in einer solchen Situation das Fußgängerschutzsystem also die Aktuatorik schon bei einem schwächeren Sensorsignal auslöst, da ein Fußgängerunfall wahrscheinlicher ist. Als Sensorsignal wird das Signal von der Kontaktsensorik verstanden. Diese Information des schlecht zu überschauenden Fußgängerüberwegs würde entweder auf dem CAN-Bus bereitgestellt oder aber einem anderen Steuergerät wie einem Airbagsteuergerät direkt mitgeteilt werden.

Vorteilhafterweise können die erfindungsgemäßen Funktionen direkt auf bereits vorhandene Systeme zurückgreifen und stellen damit eine Zusatzfunktion dar.

Mittels eines Videosystems ist es leicht möglich, bei einer Bilderkennung einen Fußgängerüberweg wie einen Zebrastreifen zu erkennen. Zusätzlich kann der Verdeckungsgrad des Fußgängerüberwegs bestimmt werden. Dazu werden Hindernisse im Bereich dieses Fußgängerüberwegs identifiziert. Über eine CAN-Schnittstelle ist es möglich, auf die Tachogeschwindigkeit bzw. die Raddrehzahl zurückzugreifen, um die Eigengeschwindigkeit zu bestimmen. Da hier stehende Objekte betrachtet werden und nicht auf sehr schnelle Objekte zurückgeschlossen werden muss, besteht in der Regel weniger die Anforderung an die Relativgeschwindigkeit, die hier jedoch zusätzlich berücksichtigt werden kann.

Der Algorithmus ermittelt die aktuelle Situation und gibt entsprechend nach Art und Häufigkeit der Objekte eine entsprechende Warnung an den Fahrer ab. Dies wird in der Regel eine optische, haptische oder akustische Meldung sein. Eine Zusatzausführung, wenn die Geschwindigkeit berücksichtigt wird, könnte sein, dass im Algorithmus diese entsprechend ausgebildet wird und gegebenenfalls aktiv in das Motor- und/oder Bremsmanagement eingegriffen wird.

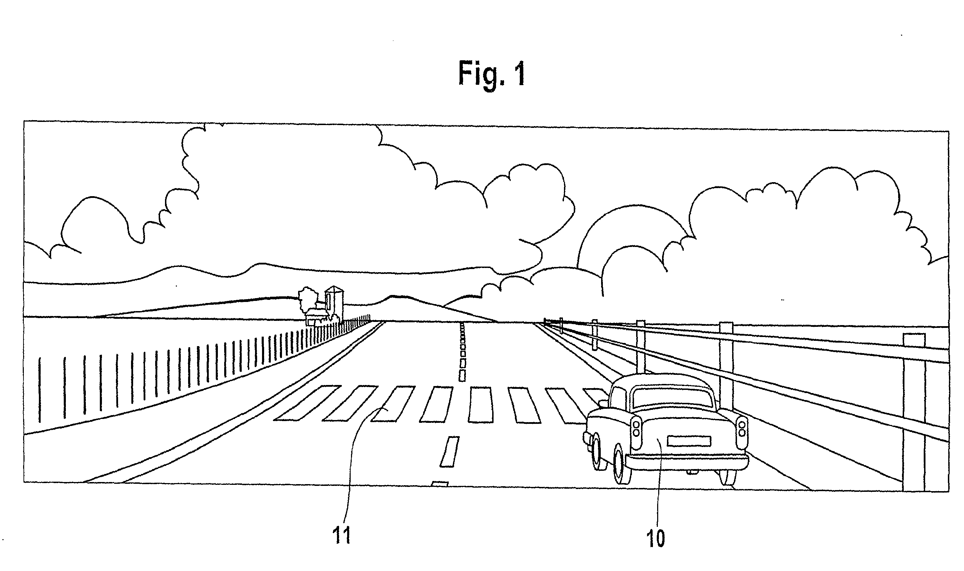

Figur 1 zeigt eine typische Szene mit einem Fußgängerüberweg. Der Fußgängerüberweg 11 ist hier ein Zebrastreifen. Ein Fahrzeug 10 nähert sich ihm. In diesem Fall besteht keine Verdeckung. Vom Fahrzeug 10 aus kann die ganze Szene überblickt werden. Stellt jedoch das Fahrzeug 10 ein Hindernis dar, dann verdeckt es den rechten Zugang zum Zebrastreifen 11. Sollte sich dahinter ein Kind verbergen, könnte es ein Fahrer, der sich nunmehr dem Zebrastreifen 11 nähert, gegebenenfalls zu spät erkennen, wenn es hinter dem Fahrzeug 10 hervorrennt. Diese Problematik wird durch die erfindungsgemäße Vorrichtung erfasst.

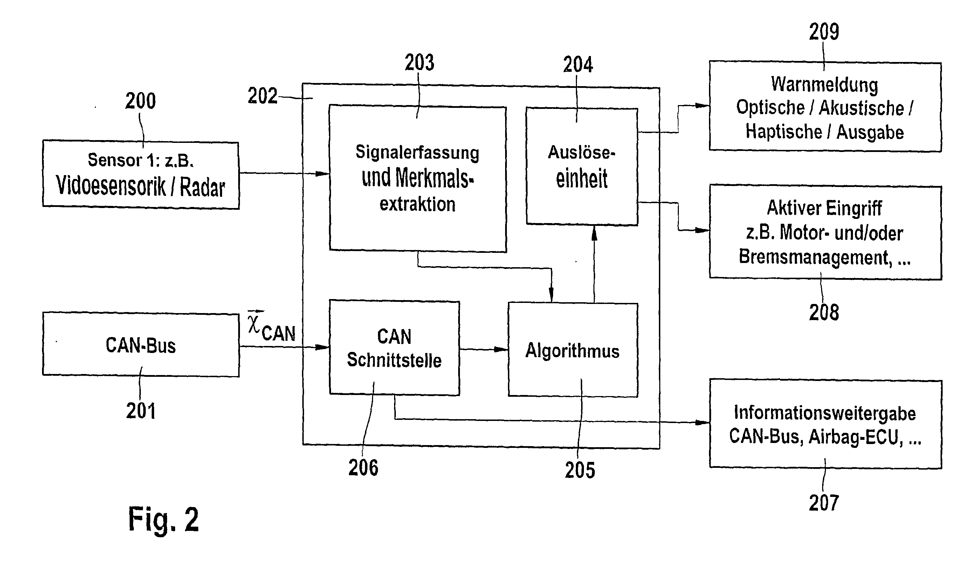

Figur 2 zeigt nun ein Blockschaltbild der erfindungsgemäßen Vorrichtung. Die Vorrichtung weist ein Steuergerät 202 auf. An das Steuergerät 202 ist eine Umfeldsensorik 200 angeschlossen, die in einem Prozessor im Steuergerät 202 einer Signalerfassung und Merkmalsextraktion 203 unterzogen wird. Die Erkennung, ob ein Fußgängerüberweg vorliegt und welche Verdeckung des Fußgängerüberwegs vorhanden ist, wird einem Algorithmus 205 mitgeteilt. Der Algorithmus 205 berücksichtigt hier über eine CAN-Schnittstelle 206 Signale, die auf dem CAN-Bus 201 vorliegen. Dazu zählt beispielsweise die Eigengeschwindigkeit des Fahrzeugs. Erkennt der Algorithmus 205 einen Fußgängerüberweg mit einem bestimmten Verdeckungsgrad, aktiviert er eine Auslöseeinheit 204, die bewirkt, dass eine Warnmeldung 209 ausgegeben wird und/oder ein aktiver Eingriff in das Fahrverhalten 208 vorgenommen wird. Die Auslöseeinheit 204 wird jedoch nur aktiviert, wenn der Algorithmus 205 ein entsprechendes Gefahrenpotential bestimmt. Liegt ein hoher Verdeckungsgrad vor, sind beispielsweise 30% des Fußgängerübergangs verdeckt und dabei insbesondere die Zugänge zum Fußgängerüberweg, dann erfolgt zumindest die Ausgabe der Warnmeldung 209. Je nach Geschwindigkeit des Fahrzeugs kann auch ein aktiver Eingriff 208 erfolgen, um das Fahrzeug bezüglich seiner Geschwindigkeit zu reduzieren. Darüber hinaus teilt der Algorithmus über die CAN-Schnittstelle 206 seine Erkenntnisse, beispielsweise über einen CAN-Bus oder direkt einem Airbagsteuergerät mit. Damit kann beispielsweise das Airbagsteuergerät in Abhängigkeit von dem Gefahrenpotential, dass erkannt worden ist, seine Algorithmen schärfer schalten, um beispielsweise ein Fußgängerschutzsystem rechtzeitig auslösen zu können. Prinzipiell ist eine Berechnung in einem eigenen Steuergerät möglich. Es ist jedoch denkbar, dass die Auslöseeinheit 204, Algorithmus 205 und die Signal-und Merkmalsextraktion 203 sowie CAN-Schnittstelle 206 im Airbagsteuergerät integriert sind.

Insbesondere beim aktiven Eingriff in das Fahrverhalten muss das Fahrzeug auch Umgebungsparameter berücksichtigen, z. B. in Abstand zu einem nachfolgenden Fahrzeug. Die Umfeldsensorik 200 kann neben einer Videosensorik, die hier vorzuziehen ist, auch Radar, Ultraschall und/oder Lidar aufweisen. Zusätzlich oder anstatt der Umfeldsensorik zur Erkennung des Zebrastreifens 11 kann auch eine Ortungsvorrichtung wie ein GPS-System oder ein Navigationsgerät zur Erkennung der Annäherung an den Zebrastreifen 11 verwendet werden. Dabei ist es dann erforderlich, dass Fußgängerüberwege in einer Datenbank abgespeichert sind, so dass anhand der aktuellen Position des Fahrzeugs und der Positionen der Fußgängerüberwege eine Annäherung erkannt werden kann. Ein die Annäherung kennzeichnendes Signal kann beispielsweise ab einem Abstand von 100 Meter erfolgen.

## Patentansprüche

1. Vorrichtung zur Detektion einer Annäherung an einen Fußgängerüberweg (11) in einem Fahrzeug (10), wobei die Vorrichtung ein erstes, die Annäherung kennzeichnendes Signal erzeugt, **dadurch gekennzeichnet, dass** die Vorrichtung in Abhängigkeit von dem ersten Signal eine Umfeldsensorik (200) aktiviert, so dass die Umfeldsensorik (200) einen Verdeckungsgrad des Fußgängerüberwegs (11) bestimmt und in Abhängigkeit von dem Verdeckungsgrad ein diesen Verdeckungsgrad kennzeichnendes zweites Signal erzeugt.

2. Vorrichtung nach Anspruch 1, **dadurch gekennzeichnet, dass** die Vorrichtung in Abhängigkeit von dem zweiten Signal eine Ausgabe ausgibt.

3. Vorrichtung nach Anspruch 1, **dadurch gekennzeichnet, dass** die Vorrichtung in Abhängigkeit von dem zweiten Signal ein Aktivierungssignal für ein Fahrzeugsystem (209, 208) erzeugt.

4. Vorrichtung nach Anspruch 3, **dadurch gekennzeichnet, dass** das Fahrzeugsystem ein Fußgängerschutzsystem ist, wobei zur Erzeugung des Aktivierungssignals zusätzlich ein drittes Signal von einer Kontaktsensorik verwendet wird.

5. Vorrichtung nach Anspruch 3, **dadurch gekennzeichnet, dass** das Fahrzeugsystem (208) ein Bremssystem und/oder ein Motormanagementsystem ist, wobei zur Erzeugung des Aktivierungssignals zusätzlich eine Geschwindigkeit berücksichtigt wird.

## Claims

1. Device in a vehicle (10) for detecting that the vehicle (10) is approaching a pedestrian crossing (11), the device generating a first signal which characterizes the approach, **characterized in that** the device activates a surroundings sensor system (200) as a function of the first signal, so that the surroundings sensor system (200) determines a degree of coverage of the pedestrian crossing (11) and generates a second signal which characterizes this degree of coverage as a function of the degree of coverage.

2. Device according to Claim 1, **characterized in that** the device outputs an output as a function of the second signal.

3. Device according to Claim 1, **characterized in that** the device generates an activation signal for a vehicle system (209, 208) as a function of the second signal.

4. Device according to Claim 3, **characterized in that** the vehcile system is a pedestrian protection system, a third signal being additionally used by a contact sensor system to generate the activation signal.

5. Device according to Claim 3, **characterized in that** the vehicle system (208) is a brake system and/or an engine management system, a speed being additionally taken into account in order to generate the actuation signal.

## Revendications

1. Dispositif de détection dans un véhicule (10) d'une approche d'un passage piétons (11), le dispositif générant un premier signal caractérisant l'approche,
**caractérisé en ce qu'**
en fonction du premier signal, le dispositif active un capteur d'environnement (200) de sorte que le capteur d'environnement (200) détermine un degré de masquage du passage piétons (11) et génère un deuxième signal caractérisant ce degré de masquage en fonction du degré de masquage.

2. Dispositif selon la revendication 1,
**caractérisé en ce que**
le dispositif réalise une émission en fonction du deuxième signal.

3. Dispositif selon la revendication 1,
**caractérisé en ce que**
le dispositif génère un signal d'activation pour un système de véhicule (209, 208) en fonction du deuxième signal.

4. Dispositif selon la revendication 3,
**caractérisé en ce que**
le système de véhicule est un système de protection de piétons, un troisième signal supplémentaire issu d'un capteur de contact étant en outre utilisé pour la génération du signal d'activation.

5. Dispositif selon la revendication 3,
**caractérisé en ce que**
le système de véhicule (208) est un système de freinage et/ou un système de gestion de moteur, et pour la génération du signal d'activation on tient également compte d'une vitesse.
